# EUROPEAN PATENT SPECIFICATION

(11) **EP 1 950 917 B1**
(45) Date of publication and mention of the grant of the patent: **13.06.2012**
(21) Application number: 06775462.2
(22) Date of filing: 23.08.2006
(51) Int. Cl.: H04L 12/56, H04L 12/24

(54) **METHODS FOR PEER-TO-PEER APPLICATION MESSAGE IDENTIFYING AND OPERATING REALIZATION AND THEIR CORRESPONDING DEVICES**
VERFAHREN ZUR PEER-TO-PEER-ANWENDUNGSNACHRICHTENIDENTIFIZIERUNG UND BETRIEBSREALISIERUNG UND ENTSPRECHENDE EINRICHTUNGEN DAFÜR
PROCEDES POUR L'IDENTIFICATION DE MESSAGES D'APPLICATION ENTRE HOMOLOGUES ET DE REALISATION D'OPERATIONS ET LEURS DISPOSITIFS CORRESPONDANTS

(30) Priority: 18.10.2005 CN 200510109125
(43) Date of publication of application: 30.07.2008
(73) Proprietor: Huawei Technologies Co., Ltd., Longgang District, Shenzhen Guangdong 518129 (CN)
(72) Inventor: LEI, Yikang, Guangdong 518129 (CN)
(74) Representative: Pfenning, Meinig & Partner GbR
(86) International application number: PCT/CN2006/002144
(87) International publication number: WO 2007/045144

(56) References cited:
- CN-A- 1 477 823
- US-A1- 2005 226 216
- CYRIL SOLDANI: "Peer-to-Peer Behaviour Detection by TCP Flows Analysis" UNIVERSITY OF LIEGE, [Online] 1 April 2004 (2004-04-01), XP002510591 liege Retrieved from the Internet: URL:http://hackerz.ir/e-books/P2P_Behaviou r_Detection.pdf> [retrieved on 2009-01-15]
- KARAGIANNIS T ET AL: "Transport Layer Identification of P2P Traffic" PROCEEDINGS OF THE 2004 ACM SIGCOMM INTERNET MEASUREMENT CONFERENCE. IMC 2004. TAORMINA, SICILY, ITALY, OCT. 25 - 27, 2004; [PROCEEDINGS OF THE ACM SIGCOMM INTERNET MEASUREMENT CONFERENCE. IMC], NEW YORK, NY : ACM, US, 25 October 2004 (2004-10-25), pages 121-134, XP007903831 ISBN: 978-1-58113-821-4
- BLEUL H ET AL: "A Simple, Efficient and Flexible Approach to Measure Multi-protocol Peer-to-Peer Traffic" LECTURE NOTES IN COMPUTER SCIENCE, SPRINGER VERLAG, BERLIN; DE, vol. 3421, 1 April 2005 (2005-04-01), pages 606-616, XP002450705
- KARAGIANNIS T ET AL: "Is P2P dying or just hiding?" GLOBAL TELECOMMUNICATIONS CONFERENCE, 2004. GLOBECOM '04. IEEE DALLAS, TX, USA 29 NOV.-3 DEC., 2004, PISCATAWAY, NJ, USA,IEEE, vol. 3, 29 November 2004 (2004-11-29), pages 1532-1538, XP010757779 ISBN: 978-0-7803-8794-2
- JIANGTAO L, YONGLING J.: 'Survey of P2P Traffic Identification and Engineering Technology' TELECOMMUNICATIONS SCIENCE March 2005, pages 57 - 60, XP008080579

## Description

### Field of the Invention

The present invention relates to the network communication field and in particular to a method and device for identifying a Peer-To-Peer (P2P) application message and a method and device for operational realization of a Peer-To-Peer application message.

### Related Art of the invention

P2P technology is a kind of new application emerging in recent years for sharing and downloading data amongst users. A major feature of the P2P technology is direct exchange of data or services between different PC users without a relay device. The P2P has broken the traditional client/server mode with each node in a peer-to-peer network being treated equally and provided with features of both a client and a server so as to act as both a service user and a service provider. The P2P allows an Internet user to directly use a file of an opposite party so that each user can be connected directly to a computer of another user for file exchange without first connection to a server for subsequent browsing and downloading.

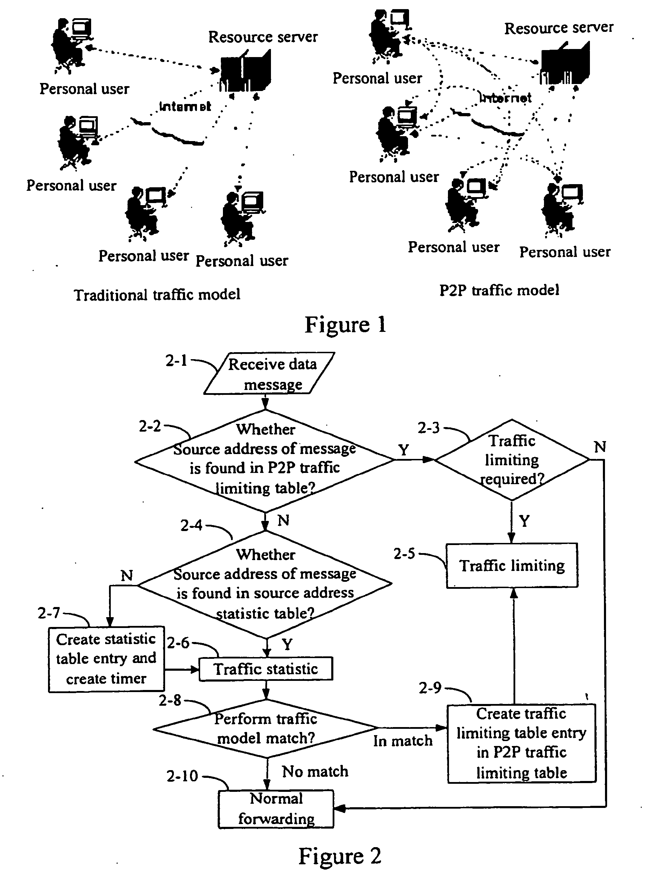

With the rapid development of P2P technology, the storage mode of the Internet will evolve from the current "centralized location of contents" to "decentralized storage of contents", and the P2P will change the large website centered traffic status over the Internet. Figure 1 illustrates a schematic diagram of the difference between the traditional Internet traffic model and the P2P traffic model.

The P2P technology provides mainly the possibility for distributed data exchange. With the gradual increase of processing capability and hard disk space of personal computers, distributed storage of resources is already feasible, and storing resources at a centralized resource server is not the only option for storing resources any longer. Currently, 70% of the Internet traffic is for P2P applications, and the traditional HTTP traffic is not the predominating Internet traffic. Downlink traffic of a personal user (from the Internet to the personal user) used to be far greater than uplink traffic thereof, but with the emergence of the P2P technology, both uplink traffic and downlink traffic of a personal user have become much great. Consequently, the P2P technology adds to congestion of the network.

The currently popular examples of P2P software over the network includes the following.

1. BT (BitTorrent). The BitTorrent is P2P software for multi-point downloading with public source codes and is very convenient for use like a browser plug-in, and is suitable for downloading newly published hot resources. BT traffic accounts for 50% of all traffic over the Internet.

2. eDonkey. The eDonkey is P2P downloading software with public source codes. eDonkey traffic accounts for 20% of all traffic over the Internet.

3. eMule. The eMule is P2P downloading software with public source codes. eMule traffic accounts for 20% of all traffic over the Internet.

In a method for limiting traffic of P2P applications in the prior art, P2P traffic is limited by filtering known ports of P2P applications.

In a BT implementation, a connection between BT clients falls within a range of known ports (6881∼6889). In an eMule/eDonkey implementation, known ports of eMule/eDonkey are as follows: by default, a client is connected with a server via the TCP port 4661 (referred to as the port-s), and the client accesses another client via the TCP port 4662 (referred to as the port-c) and the UDP port 4665 (referred to as the port-c-u). These ports can be set with alternative values according to different software in use. This method identifies a P2P session by the above range of ports and limits traffic of the identified session.

The above method for limiting P2P application traffic is disadvantageous in that it was previously useful to some degree, but may not identify accurately a P2P message by the range of ports.

For example, taking the BT as an example, although the BT official website provides a default range of listened ports (6881∼6889), a user may change this range of ports by some technical means. Further, there are a large number of BT clients and they adopt different ranges of ports and implementations as illustrated in Table 1.

**Table 1: Schematic relationship between implementations and port ranges of BT clients**

| BT client | Range of port |
|---|---|
| Greedy ABC | Manually configurable |
| BitComet | Not published |
| BitTorrent Plus | Manually configurable |
| BitTorrent | 6881∼6889 |
| Bit Spirit | 16881 |

Taking an eMule/eDonkey implementation as an example, in addition to the above known ports, the software also provides a HiID scheme through which a user can set a port. Further, all the above P2P applications have public source codes, so it is not difficult to change the ports for the P2P applications. Therefore, a P2P message can not be identified accurately by the range of ports of the P2P applications since the range of ports is not fixed.

In another method for limiting traffic of P2P applications in the prior art, a P2P session is identified by parsing a character word of handshake information of P2P software, and traffic of the identified session is limited.

Taking a BT application as an example, a BT message is extracted and identified through a handshake process of the BT peer-to-peer protocol. In the handshake process, 19 is firstly sent and then a character string "BitTorrent protocol" is sent, in which 19 means the length of "BitTorrent protocol". That is, the character word identifying a BT message is the combination of "19" and the character string "BitTorrent protocol". A BT session can be identified with this character word.

Taking an eMule/eDonkey application as an example, all eMule/eDonkey protocol messages comply with a standard message head (only the first data message is provided with a message head since a data packet may produce application layer fragments). The message head includes a character word of one byte (E3 or E5), and therefore it can be checked whether each of the first several messages of Transport Control Protocol (TCP) data includes this character word (E3 or E5), with this character an eMule/eDonkey session can be identified.

The above method for limiting traffic of P2P applications is disadvantageous in that this method is greatly restricted.

This method requires that a routing device supports a session table and identifies a P2P session during the handshake stage. Therefore it is difficult for the routing device to control the subsequent messages if it fails to support a session table or if it fails to perform Network Address Translation (NAT).

Since characteristic realization of current P2P software varies greatly, this method requires identify different P2P software in different ways. That is, a corresponding identifying method has to be added for each kind of P2P software. Therefore, this method can not intelligently deal with new P2P applications that will emerge in the future. If a P2P application that will evolve in the future has no character code or a character code difficult to be identified, this method may not be applicable.

In still another method for limiting traffic of P2P applications in the prior art, traffic limiting operations are performed according to the address of a message. For example, operations such as CAR (one kind of traffic control approach) can be performed on a message or the number of connection times can be limited for the message according to the source address of the message.

The above method for limiting traffic of P2P applications is disadvantageous in that this method does not identify messages, and therefore this method is not accurate, and can not perform different traffic limitations on different application messages.

As can be seen from the above description, the current methods for identifying P2P application messages have poor accuracy, so that traffic limiting operations on P2P application messages have restricted applicability and poor accuracy. In the above, only the traffic limiting operations on P2P application messages have been described, but operations on P2P application messages can also be charging operations or the like. By the same token, the current methods for identifying P2P application messages may result in that other operations on a P2P application message have the drawbacks of restricted applicability, poor accuracy, etc.
Cyril Soldani, "Peer-to-Peer Behavior Detection by TCP Flows Analysis" University of Liege, [Online] 1 April 2004 (2004-04-01) Retrieved from the Internet: <URL:http://hackerz.ir/e-books/P2P_Behaviour_Detection.pd> [retrieved on 2009-01-15] discloses the number of unique IP address, prefixes and ASes participating are computed in each P2P system and how many connections (emitting or receiving) each peer has with other peers are measured.

### Summary of the Invention

An object of the invention is to provide a method for limiting traffic of P2P applications so that a P2P session can be identified by a traffic model and traffic of the identified P2P session can be limited.

The object of the invention is achieved by the following technical solutions.
A method for limiting traffic of Peer-To-Peer applications including:
making traffic statistic on a message; and
identifying the message as a P2P application message upon determining that the traffic statistic result is in accordance with a P2P traffic model.

The following technical solutions for the method for limiting traffic of Peer-To-Peer applications are optional.

The statistic and identification method includes:
making a statistic on the change rate of destination addresses accessed by a message within a preset period of time; and/or
making a statistic on the number of newly established sessions per second for the message within a preset period of time; and/or
making a statistic on the number of destination addresses with which the connection is maintained for the message within a preset period of time; and/or
making a statistic on the number of sessions with which the connection is maintained for the message within a preset period of time;
when the change rate of destination addresses accessed by the message obtained from the statistic reaches a preset threshold; and/or
when the number of newly established sessions per second for the message obtained from the statistic reaches a preset threshold; and/or
when the number of destination addresses with which the connection is maintained for the message obtained from the statistic reaches a preset threshold; and/or
when the number of sessions with which the connection is maintained for the message obtained from the statistic reaches a preset threshold, determining that the traffic statistic result corresponding to the message is in accordance with the P2P traffic model and determining the message as a P2P application message.

The method further includes:
creating a message source address based statistic table, storing the traffic statistic results for the message in the statistic table and updating the stored statistic result according to a preset period of time.

The invention further provides a method for operational realization of a Peer-To-Peer application message including:
making a traffic statistic on a message; identifying the message as a P2P application message upon determining that the traffic statistic result corresponding to the message is in accordance with a P2P traffic model; and performing predetermined operations on the P2P application message.

The following technical solutions for the method for operating a Peer-To-Peer application message are optional.
The statistic and identification method includes:
making a statistic on the change rate of destination addresses accessed by a message within a preset period of time; and/or
making a statistic on the number of newly established sessions per second for the message within a preset period of time; and/or
making a statistic on the number of destination addresses with which the connection is maintained for the message within a preset period of time; and/or
making a statistic on the number of sessions with which the connection is maintained for the message within a preset period of time;
when the change rate of destination addresses accessed by the message obtained from the statistic reaches a preset threshold; and/or
when the number of newly established sessions per second for the message obtained from the statistic reaches a preset threshold; and/or
when the number of destination addresses with which the connection is maintained for the message obtained from the statistic reaches a preset threshold; and/or
when the number of sessions with which the connection is maintained for the message obtained from the statistic reaches a preset threshold, determining that the traffic statistic result corresponding to the message accords with the P2P traffic model and determining the message as a P2P application message.

the predetermined operations include one or more of: a traffic limiting operation, a statistic operation for charging and a statistic operation for traffic limiting.

The method further includes:
creating a message source address based statistic table, storing the traffic statistic results for the message in the statistic table and updating the stored statistic results according to a preset period of time.

The method further includes:
creating a message source address based P2P operational table, and storing the source address of the P2P application message matching the traffic model and the corresponding operations in the P2P operational table;
upon receiving a message, if the source address of the message is found in the P2P operational table, executing the predetermined operations corresponding to the source address on the message; otherwise making a traffic statistic on the message, storing the traffic statistic result, performing model match on the message according to the traffic statistic result, and performing predetermined operations on the message in match.

The method further includes:
performing the predetermined operations on the P2P application message in combination with an Access Control List, ACL.

The method further includes:
performing the predetermined operations on the message according to the source address and/or destination address of the P2P application message; or
performing the predetermined operations in the direction of receiving or transmitting the P2P application message; or
limiting the total number of the P2P application messages; or
limiting the number of connections for the P2P application message.

The invention further provides a device for identifying a Peer-To-Peer application message including:
a statistic module adapted to perform a traffic statistic on a change rate of destination addresses accessed by the message within a preset period of time; and/or performing the traffic statistic on the number of sessions newly established per second for the message within a preset period of time; and
an identification module adapted to obtain a traffic statistic result corresponding to the message from the statistic module, to identify the message as a P2P application message upon determining that the traffic statistic result is in accordance with a P2P traffic model, and to output the identification result.

The invention further provides a device for operating a P2P application message including:
a statistic module adapted to make a traffic statistic on a message;
an identification module adapted to obtain a traffic statistic result corresponding to the message from the statistic module, to identify the message as a P2P application message upon determining that the traffic statistic result accords with a P2P traffic model, and to output the identification result; and
an operational processing module adapted to perform predetermined operations on the P2P application message identified by the identification module according to the identification result of the identification module.

The operational processing module includes a storage sub-module and an operational processing sub-module;
the storage sub-module is adapted to store the source address of the P2P application message identified by the identification module and the corresponding predetermined operations in a P2P operation table according to the identification result; and
the operational processing sub-module is adapted to find the source address of a message in the P2P operation table when the device receives the message, and performs the predetermined operations corresponding to the source address on the message; or informs the statistic module to make a traffic statistic on the message if the source address of the message can not be found in the P2P operation table.

As can be seen from the above technical solutions, the invention can effectively limit traffic of a P2P session by identifying the P2P session according to the traffic model. The invention is applicable not only to the current P2P applications but also to new P2P applications that may emerge in the future. The invention addresses the problem of low efficiency due to analysis of a P2P feature by packets. The invention can be applied in combination with an Access Control List (ACL) to define different P2P traffic limiting solutions in response to different networking and customer demands and thus to satisfy the diversity of traffic limiting solutions with widespread applicability.

### Brief Description of the Drawings

Figure 1 is a schematic diagram showing the difference between a traditional Internet traffic model and a P2P traffic model; and

Figure 2 is a flow chart of an embodiment of performing traffic limiting operations on a P2P application message.

### Detailed Description of the Invention

Embodiments of the invention provide a method for limiting traffic of a P2P application, and the core idea of the invention is that a P2P session is identified by a traffic model, and predetermined operations are performed on the identified P2P session, e.g., traffic limiting operations, statistic operations for traffic limiting, statistic operations for charging, etc.

Now the invention will be described in details with reference to the drawings, and a flow chart of a process of traffic limiting operations according to the invention is illustrated in Figure 2 and includes the following processes.

At block 2-1, a data message is received.

Current bandwidth-consumptive type P2P applications all have the following traffic model features:

1. A large number of addresses are accessed in a short period of time and connections with a large number of addresses are maintained. Taking a BT application as an example, the number of accessed addresses tends easily to exceed 20 IP destinations per second.

2. A large number of sessions are concurrently maintained. Taking an eDonkey/eMule application as an example, the average number of sessions for one file is around 60, and a user tends easily to be involved in more than one thousand of sessions during downloading a large number of files.

If a high-bandwidth download may be provided by distributed resources shared between customers for a new P2P application that may emerge in the future, the new P2P application may comply with the above traffic model features.

Block 2-2 is performed when a message to be processed is received in a designated region, such as a region of a receiving interface, a set of interfaces or an administrative concept of the message.

At block 2-2, the source address of the message is searched for in a P2P traffic limiting table. Since predetermined operations in this embodiment include traffic limiting operations or statistic operations for traffic limiting, a P2P operation table can also be referred to as a P2P traffic limiting table.

In the invention, a P2P traffic limiting table based on message source address is to be created, and source addresses of a P2P application message and corresponding operations are stored in the P2P traffic limiting table.

The source address of the message is searched for in entries of the P2P traffic limiting table, and if the source address of the message is found, block 2-3 is performed; otherwise block 2-4 is performed.

At block 2-3, it is determined whether traffic limiting is required.

If the source address of the message is found in the P2P traffic limiting table, the operation corresponding to the source address, that is, the predetermined operation is further searched for, and if the found operation is a traffic limiting operation, block 2-5 is performed.

If the found operation is a statistic operation for traffic limiting, the statistic operation for traffic limiting is performed, and the result of the statistic operation can be used to update the operation in the P2P traffic limiting table. For example, when the statistic result reaches a predetermined value, the statistic operation for traffic limiting in the P2P traffic limiting table is modified to a traffic limiting operation, and block2-10 is performed. If the result of the statistic operation does not reach the predetermined value, then the new statistic result is stored, and block 2-10 is performed. The new statistic result and the predetermined value for performing the traffic limiting operation can be stored in the P2P traffic limiting table or stored independent of the P2P traffic limiting table. In the invention, the traffic limiting operation is set according to the statistic result of the statistic operation for traffic limiting. When the statistic result of the statistic operation for traffic limiting exceeds a predetermined value, the traffic limiting operation is set as the operation corresponding to the source address in the P2P traffic limiting table.

In this embodiment, if the predetermined operations further include statistic operations for charging, the invention may involve the following three cases:

1. At block 2-3, when the source address of the message is found in the P2P traffic limiting table, and the operation corresponding to the source address is a statistic operation for charging, the statistic operation for charging is performed, and then process 2-10 is performed.

2. At block 2-3, when the source address of the message is found in the P2P traffic limiting table, and the operation corresponding to the source address is a statistic operation for charging and a statistic operation for traffic limiting, the statistic operation for charging and the statistic operation for traffic limiting are performed, and then block 2-10 is performed.

3. At block 2-3, when the source address of the message is found in the P2P traffic limiting table, and the operation corresponding to the source address is a statistic operation for charging and a traffic limiting operation, the statistic operation for charging is performed, and then block 2-5 is performed.

At block 2-4, it is determined whether the source address of the message is found in a source address statistic table.

In the invention, a statistic table based message source address is created to store message traffic statistic results. Each entry of the table corresponds to a timer.

When the source address of the message is not found in any entry of the P2P traffic limiting table, the source address of the message is further searched for in the entries of the statistic table. If the source address of the message is found, block 2-6 is performed; otherwise block 2-7 is performed.

At block 2-5, traffic limiting processing is performed.

Traffic limiting is performed on the received P2P application message according to a designated traffic limiting policy.

If block 2-5 is performed following block 2-3, a traffic statistic illustrated At block 2-6 can be further made on the received P2P application message before traffic limiting.

At block 2-6, a traffic statistic is made.

A traffic statistic on the received message is made within the period of time as set by the timer corresponding to the entry in the statistic table for the source address of the message, and statistic items include:

1. A statistic on the change rate of destination addresses accessed by a message;

2. A statistic on the number of newly established sessions per second for the message;

3. A statistic on the number of destination addresses with which the connection is stored for the message; and

4. A statistic on the number of sessions with which the connection is maintained for the message.

The result of the traffic statistic including information on destination addresses and sessions etc. newly obtained from the statistic is stored in corresponding entries of the statistic table. The statistic result stored in the entry is updated according to time set by a timer corresponding to the entry. Then, process 2-8 is performed.

At block 2-7, a statistic table entry is created and a timer is created.

An entry based on the source address of the message is created in the statistic table. The entry includes information on the source address and sessions of the message etc., and a timer corresponding to the entry is created. Then process 2-6 is performed.

At block 2-8, traffic model matching is performed.

Traffic model matching is performed according to the statistic result stored in the entry of the statistic table, that is, it is determined whether the traffic of the message has the features of a P2P application. The basis for the determination is as follows:

1. It is determined whether the recorded change rate of destination addresses accessed by the message reaches a preset threshold;

2. It is determined whether the recorded number of sessions newly established per second for the message reaches a preset threshold;

3. It is determined whether the recorded number of destination addresses in connection with the message reaches a preset threshold; and

4. It is determined whether the recorded the number of sessions in connection with the message reaches a preset threshold.

Whether the traffic of the message accords with the features of a P2P application can be determined according to any one or combination of the above four determination criteria. If it is determined that the traffic of the message accords with the features of a P2P application, block 2-9 is performed; otherwise the entry in the statistic table corresponding to the source address of the message is deleted and block 2-10 is performed.

At block 2-9, a traffic limiting entry is created in the P2P traffic limiting table.

A corresponding entry based upon the source address of the message is created in the P2P traffic limiting table. When an entry is newly added to the P2P traffic limiting table, the operation in the entry can be a statistic operation for traffic limiting or a statistic operation for charging because traffic of the P2P application message is not limited directly. When the entry is newly added in the P2P traffic limiting table, the invention may include the possibility of the operation in the entry being a traffic limiting operation. Then, block 2-5 is performed.

At block 2-10, the message is forwarded normally.

The received message is forwarded normally.

In practice, the above traffic limiting solution based on traffic model can also be applied in combination with an Access Control List (ACL) to perform various P2P traffic limiting operations for users. For example, a P2P traffic limiting operation can be performed for a user with a network segment of 110.10.10.0 and a mask code of 24 bits in accordance with the ACL; a P2P traffic limiting operation can be performed by controlling a P2P traffic limiting direction according to the ACL, that is, according to either an source IP or a destination IP of the message, in either the reception direction or the transmission direction of the message; the total number of messages or the number of connections for the message can be limited, etc.

Embodiments of the invention provide a device for identifying a P2P application message including a statistic module and an identification module.

The statistic module is mainly adapted to make a traffic statistic on a message, e.g., a statistic on the change rate of destination addresses accessed by the message, a statistic on the number of sessions newly established per second for the message, a statistic on the number of destination addresses in connection with the message, a statistic on the number of sessions in connection with the message, etc. The statistic module can store the statistic result in a form of a statistic table based on message source address, and the statistic results in the statistic table can be updated according to a preset period of time. For more details please refer to the above description on embodiments.

The identification module is mainly adapted to obtain the traffic statistic result corresponding to the message from the statistic module, to identify the message as a P2P application message when determining that the traffic statistic result accords with the P2P traffic model , and to output the identification result. The identification module can determine the message as a P2P application message when one or more of the following four conditions are satisfied:

1. The change rate of destination addresses accessed by the message obtained from the statistic module reaches a preset threshold;

2. The number of sessions newly established per second for the message obtained from the statistic module reaches a preset threshold;

3. The number of destination addresses in connection with the message obtained from the statistic module reaches a preset threshold; and

4. The number of sessions in connection with the message obtained from the statistic module reaches a preset threshold.

Embodiments of the invention further provide an operational realization device for a P2P application message including a statistic module, an identification module and an operational processing module.

The embodiments of the statistic module and the identification module are as described above.

The operational processing module is mainly adapted to perform predetermined operations such as a traffic limiting operation, a statistic operation for traffic limiting and a statistic operation for charging.

The operational processing module includes a storage sub-module and an operational processing sub-module.

The storage sub-module stores a P2P operation table based message source address, such as the P2P traffic limiting table described above. The P2P operation table stores source addresses of P2P application messages hit in traffic model matching and corresponding predetermined operations. When the identification result output from the identification module is a P2P application message, if the source address of the P2P application message is absent in the P2P operation table, a corresponding entry needs to be added in the P2P traffic limiting table according to the source address of the P2P application message. When the entry is newly added into the P2P traffic limiting table, the operation in the entry can be a statistic operation for traffic limiting or a statistic operation for charging because traffic of the P2P application message is not limited directly. Of course, the invention may include the possibility of the operation in the entry being a traffic limiting operation when the entry is newly added in the P2P traffic limiting table.

Upon receiving a message by the device for operating a P2P application message according to the invention, the operational processing sub-module searches for the source address of the message in the P2P operation table in the storage sub-module and, if the source address of the message is found, predetermined operations corresponding to the source address on the message such as a traffic limiting operation, a statistic operation for traffic limiting, a statistic operation for charging are performed; or, if the source address of the message is not found, the statistic module is informed to make a traffic statistic on the message. When the operational processing sub-module performs a statistic operation for traffic limiting, the result of the statistic operation can be used to update the operation in the P2P traffic limiting table. For example, if the statistic result reaches a predetermined value, the statistic operation for traffic limiting in the P2P traffic limiting table in the storage sub-module can be modified to a traffic limiting operation; if the statistic result does not reach the predetermined value, the new statistic result is stored. The new statistic result and the predetermined value for performing the traffic limiting operation can be stored in the storage sub-module or the operational processing sub-module.

The storage sub-module can further store an ACL so that the operational processing sub-module can perform various predetermined operations on a P2P application message in combination with the ACL. For example, the operational processing sub-module can control a P2P traffic limiting direction according to the ACL, that is, perform a P2P traffic limiting operation according to the source IP or the destination IP of the message, in the reception direction or the transmission direction of the message; the total number of messages or the number of connections for the message can be limited, etc.

The foregoing descriptions are merely illustrative of the preferred embodiments of the invention. The scope of the invention will not be limited thereto. Any variations or alternatives which will occur readily to those skilled in the art in light of the disclosure of the invention shall fall within the scope of the invention. And the scope of the invention is only defined in the claims appended.

## Claims

1. A method for identifying a Peer-To-Peer application message comprising:
performing a traffic statistic (2-6) on a change rate of destination addresses accessed by the message within a preset period of time; and/or performing the traffic statistic (2-6) on the number of sessions newly established per second for the message within a preset period of time;
comparing (2-8) the traffic statistic result corresponding to the message with a Peer-To-Peer traffic model; and
identifying the message as a Peer-To-Peer application message if the statistic result matches the Peer-To-Peer traffic model.

2. The method according to claim 1, wherein the statistic result matching the Peer-To-Peer traffic model comprises:
the change rate of destination addresses accessed by the message obtained from the statistic reaches a preset threshold; and/or
the number of sessions newly established per second for the message obtained from the statistic reaches a preset threshold; and/or
the number of destination addresses in connection with the message obtained from the statistic reaches a preset threshold; and/or
the number of sessions in connection with the message obtained from the statistic reaches a preset threshold.

3. The method according to claim 1 or 2, further comprising:
creating a statistic table based on message source address, storing the traffic statistic result of the message in the statistic table, and updating the stored statistic result according to a preset period of time.

4. The method according to claim 1, 2 or 3, further comprising:
performing predetermined operations on the Peer-To-Peer application message.

5. The method according to claim 4, wherein the predetermined operations comprise at least one of the following: a traffic limiting (2-5) operation (2-9) a statistic operation for charging, and a statistic operation for traffic limiting.

6. The method according to claim 4 or 5 further comprising:
creating a Peer-To-Peer operation table based message source address, and storing the source address of the Peer-To-Peer application message matching the traffic model and the corresponding operations in the Peer-To-Peer operation table.

7. The method according to claim 6 further comprising:
performing the predetermined operations corresponding to the source address of the received message, if the source address of the received message is found in the Peer-To-Peer operation table;
otherwise making a traffic statistic (2-6) on the message, storing the traffic statistic result, performing traffic model matching (2-8) on the message according to the traffic statistic result, and performing the predetermined operations on the message hit in the traffic model matching (2-8).

8. The method according to claim 4,5 or 6 further comprising:
performing the predetermined operations on the Peer-To-Peer application message in combination with an Access Control List.

9. The method according to claim 8 further comprising:
performing the predetermined operations on the message according to the source address and/or a destination address of the Peer-To-Peer application message; or
performing the predetermined operations in a direction of receiving or transmitting the Peer-To-Peer application message; or
limiting the total number of the Peer-To-Peer application messages; or
limiting the number of connections for the Peer-To-Peer application message.

10. A device for identifying a Peer-To-Peer application message comprising:
a statistic module adapted to perform a traffic statistic (2-6) on a change rate of destination addresses accessed by the message within a preset period of time; and/or perform the traffic statistic on the number of sessions newly established per second in connection with the message within a preset period of time; and
an identification module adapted to obtain the traffic statistic result corresponding to the message from the statistic module, to identify the message as a Peer-To-Peer application message upon determining that the traffic statistic result accords with a Peer-To-Peer traffic mode (2-8), and to output an identification result.

11. The device according to claim 10, further comprising:
an operational processing module adapted to perform predetermined operations on the Peer-To-Peer application message identified by the identification module according the identification result of the identification module.

12. The device according to claim 11, wherein the operational processing module comprises:
a storage sub-module adapted to store a P2P operation table based message source address , and the P2P operation table comprises the source address of the Peer-To-Peer application message identified by the identification module and the corresponding predetermined operations; and
an operation processing sub-module adapted to perform the predetermined operations corresponding to the source address on the received message if the source address of the received message is found in the Peer-To-Peer operation table , or to inform the statistic module to make a traffic statistic on the message if the source address of the received message is not found in the Peer-To-Peer operation table.

## Patentansprüche

1. Verfahren zum Identifizieren einer Peer-to-Peer-Anwendungsnachricht, umfassend:
Durchführen einer Verkehrsstatistik (2-6) an einer Änderungsrate von Destinationsadressen, auf die von der Nachricht innerhalb einer voreingestellten Zeitperiode zugegriffen wird; und/oder Durchführen der Verkehrsstatistik (2-6) an der Anzahl von innerhalb einer voreingestellten Zeitperiode für die Nachricht neu angelegten Sitzungen pro Sekunde;
Vergleichen (2-8) des Verkehrsstatistikergebnisses entsprechend der Nachricht mit einem Peer-to-Peer-Verkehrsmodell; und
Identifizieren der Nachricht als eine Peer-to-Peer-Anwendungsnachricht, falls das Statistikergebnis mit dem Peer-to-Peer-Verkehrsmodell übereinstimmt.

2. Verfahren nach Anspruch 1, wobei das Statistikergebnis, das mit dem Peer-to-Peer-Verkehrsmodell übereinstimmt, Folgendes umfasst:
die Änderungsrate von Destinationsadressen, auf die von der Nachricht zugegriffen wird, aus der Statistik erhalten, erreicht einen voreingestellten Schwellwert; und/oder die Anzahl von neu angelegten Sitzungen pro Sekunde für die Nachricht, aus der Statistik erhalten, erreicht einen voreingestellten Schwellwert; und/oder die Anzahl von Destinationsadressen in Verbindung mit der Nachricht, von der Statistik erhalten erreicht, einen voreingestellten Schwellwert; und/oder die Anzahl von Sitzungen in Verbindung mit der Nachricht, von der Statistik erhalten erreicht, einen voreingestellten Schwellwert.

3. Verfahren nach Anspruch 1 oder 2, weiterhin umfassend:
Herstellen einer Statistiktabelle auf der Basis einer Nachrichtenquelladresse, Speichern des Verkehrsstatistikergebnisses der Nachricht in der Statistiktabelle und Aktualisieren des gespeicherten Statistikergebnisses gemäß einer voreingestellten Zeitperiode.

4. Verfahren nach Anspruch 1, 2 oder 3, weiterhin umfassend:
Durchführen von vorbestimmten Operationen an der Peer-to-Peer-Anwendungsnachricht.

5. Verfahren nach Anspruch 4, wobei die vorbestimmten Operationen mindestens eine der folgenden umfassen: eine Verkehrsbeschränkungsoperation (2-5); eine Statistikoperation zum Laden und eine Statistikoperation zur Verkehrsbeschränkung.

6. Verfahren nach Anspruch 4 oder 5, weiterhin umfassend:
Erzeugen einer Peer-to-Peer-Operationstabelle auf der Basis einer Nachrichtenquelladresse und
Speichern der Quelladresse der Peer-to-Peer-Anwendungsnachricht, die mit dem Verkehrsmodell übereinstimmt, und der entsprechenden Operationen in der Peer-to-Peer-Operationstabelle.

7. Verfahren nach Anspruch 6, weiterhin umfassend:
Durchführen der vorbestimmten Operationen entsprechend der Quelladresse der empfangenen Nachricht, falls die Quelladresse der empfangenen Nachricht in der Peer-to-Peer-Operationstabelle gefunden wird;
ansonsten Herstellen einer Verkehrsstatistik (2-6) zu der Nachricht, Speichern des Verkehrsstatistikergebnisses, Durchführen einer Verkehrsmodellübereinstimmung (2-8) an der Nachricht gemäß dem Verkehrsstatistikergebnis und Durchführen der vorbestimmten Operationen an dem Nachrichtentreffer in der Verkehrsmodellübereinstimmung (2-8).

8. Verfahren nach den Ansprüchen 4, 5 oder 6, weiterhin umfassend:
Durchführen der vorbestimmten Operationen an der Peer-to-Peer-Anwendungsnachricht in Kombination mit einer Access Control List.

9. Verfahren nach Anspruch 8, weiterhin umfassend:
Durchführen der vorbestimmten Operationen an der Nachricht gemäß der Quelladresse und/oder einer Destinationsadresse der Peer-to-Peer-Anwendungsnachricht; oder
Durchführen der vorbestimmten Operationen in einer Richtung des Empfangens oder Übertragens der Peer-to-Peer-Anwendungsnachricht; oder
Begrenzen der Gesamtzahl der Peer-to-Peer-Anwendungsnachrichten; oder
Begrenzen der Anzahl von Verbindungen für die Peer-to-Peer-Anwendungsnachricht.

10. Einrichtung zum Identifizieren einer Peer-to-Peer-Anwendungsnachricht, umfassend:
ein Statistikmodul, ausgelegt zum Durchführen einer Verkehrsstatistik (2-6) an einer Änderungsrate von Destinationsadressen, auf die von der Nachricht innerhalb einer voreingestellten Zeitperiode zugegriffen wird; und/oder Durchführen der Verkehrsstatistik an der in Verbindung mit der Nachricht innerhalb einer voreingestellten Zeitperiode pro Sekunde neu hergestellten Anzahl von Sitzungen; und
ein Identifikationsmodul, ausgelegt zum Erhalten des Verkehrsstatistikergebnisses entsprechend der Nachricht von dem Statistikmodul, zum Identifizieren der Nachricht als eine Peer-to-Peer-Anwendungsnachricht beim Bestimmen, dass das Verkehrsstatistikergebnis mit einem Peer-to-Peer-Verkehrsmodell (2-8) übereinstimmt und zum Ausgeben eines Identifikationsergebnisses.

11. Einrichtung nach Anspruch 10, weiterhin umfassend:
ein operationales Verarbeitungsmodul, ausgelegt zum Durchführen vorbestimmter Operationen an der von dem Identifikationsmodul identifizierten Peer-to-Peer-Anwendungsnachricht gemäß dem Identifikationsergebnis des Identifikationsmoduls.

12. Einrichtung nach Anspruch 11, wobei das operationale Verarbeitungsmodul Folgendes umfasst:
ein Speicherungsteilmodul, ausgelegt zum Speichern einer auf einer P2P-Operationstabelle basierenden Nachrichtenquelladresse, und die P2P-Operationstabelle umfasst die Quelladresse der von dem Identifikationsmodul identifizierten Peer-to-Peer-Anwendungsnachricht und die entsprechenden vorbestimmten Operationen; und
ein Operationsverarbeitungsteilmodul, ausgelegt zum Durchführen der vorbestimmten Operationen entsprechend der Quelladresse an der empfangenen Nachricht, falls die Quelladresse der empfangenen Nachricht in der Peer-to-Peer-Operationstabelle gefunden wird, oder zum Informieren des Statistikmoduls, eine Verkehrsstatistik an der Nachricht durchzuführen, falls die Quelladresse der empfangenen Nachricht nicht in der Peer-to-Peer-Operationstabelle gefunden wird.

## Revendications

1. Procédé d'identification d'un message d'application entre homologues comprenant :
l'exécution d'une statistique de trafic (2-6) sur un taux de changement d'adresses destinataires sollicitées par le message dans une période de temps préétablie ; et/ou l'exécution d'une statistique de trafic (2-6) sur le nombre de sessions nouvellement établies par seconde pour le message dans une période de temps préétablie ;
la comparaison (2-8) du résultat de la statistique de trafic correspondant au message à un modèle de trafic entre homologues ; et
l'identification du message comme étant un message d'application entre homologues si le résultat de la statistique correspond au modèle de trafic entre homologues.

2. Procédé selon la revendication 1, dans lequel le résultat de la statistique correspond au modèle de trafic entre homologues quand :
le taux de changement des adresses destinataires sollicitées par le message obtenu à partir de la statistique atteint un seuil préétabli ; et/ou
le nombre de sessions nouvellement établies par seconde pour le message obtenu à partir de la statistique atteint un seuil préétabli ; et/ou
le nombre d'adresses destinataires pour le message obtenu à partir de la statistique atteint un seuil préétabli ; et/ou
le nombre de sessions pour le message obtenu à partir de la statistique atteint un seuil préétabli.

3. Procédé selon la revendication 1 ou 2, comprenant en outre :
la création d'une table de statistiques basée sur l'adresse source du message, la mémorisation du résultat de la statistique de trafic du message dans la table de statistiques, et l'actualisation du résultat de la statistique mémorisé en fonction d'une période de temps préétablie.

4. Procédé selon la revendication 1, 2 ou 3, comprenant en outre :
l'exécution d'opérations prédéterminées sur le message d'application entre homologues.

5. Procédé selon la revendication 4, dans lequel les opérations prédéterminées comprennent au moins l'une des opérations suivantes : opération de limitation de trafic (2-5), opération statistique de taxation, et opération statistique de limitation de trafic.

6. Procédé selon la revendication 4 ou 5, comprenant en outre :
la création d'une adresse source de message basée sur une table d'opérations entre homologues, et
la mémorisation de l'adresse source du message d'application entre homologues correspondant au modèle de trafic et des opérations correspondantes dans la table d'opérations entre homologues.

7. Procédé selon la revendication 6, comprenant en outre :
l'exécution des opérations prédéterminées correspondant à l'adresse source du message reçu, si l'adresse source du message reçu est trouvée dans la table d'opérations entre homologues ;
dans le cas contraire, la réalisation d'une statistique de trafic (2-6) sur le message, la mémorisation du résultat de la statistique de trafic, l'exécution d'une correspondance avec le modèle de trafic (2-8) sur le message en fonction du résultat de la statistique de trafic, et l'exécution des opérations prédéterminées sur le message trouvé dans la correspondance avec le modèle de trafic (2-8).

8. Procédé selon la revendication 4, 5 ou 6, comprenant en outre :
l'exécution des opérations prédéterminées sur le message d'application entre homologues en combinaison avec une Liste de Commande d'Accès.

9. Procédé selon la revendication 8, comprenant en outre :
l'exécution des opérations prédéterminées sur le message en fonction de l'adresse source et/ou d'une adresse destinataire du message d'application entre homologues ; ou
l'exécution des opérations prédéterminées dans un sens de réception ou de transmission du message d'application entre homologues ; ou
la limitation du nombre total des messages d'application entre homologues ; ou
la limitation du nombre de connexions pour le message d'application entre homologues.

10. Dispositif d'identification d'un message d'application entre homologues comprenant :
un module de statistique adapté pour exécuter une statistique de trafic (2-6) sur un taux de changement d'adresses destinataires sollicitées par le message dans une période de temps préétablie ; et/ou exécuter la statistique de trafic (2-6) sur le nombre de sessions nouvellement établies par seconde pour le message dans une période de temps préétablie ;
un module d'identification adapté pour obtenir le résultat de la statistique de trafic correspondant au message à partir du module de statistique, identifier le message comme étant un message d'application entre homologues lorsqu'il est déterminé que le résultat de la statistique de trafic correspond à un modèle de trafic entre homologues (2-8), et produire en sortie d'un résultat d'identification.

11. Dispositif selon la revendication 10, comprenant en outre :
un module de traitement opérationnel adapté pour exécuter des opérations prédéterminées sur le message d'application entre homologues identifié par le module d'identification en fonction du résultat d'identification du module d'identification.

12. Dispositif selon la revendication 11, dans lequel le module de traitement opérationnel comprend :
un sous-module de mémorisation adapté pour mémoriser une adresse source de message basée sur une table d'opérations entre homologues, la table d'opérations entre homologues comprenant l'adresse source du message d'application entre homologues identifié par le module d'identification et les opérations prédéterminées correspondantes ; et
un sous-module de traitement d'opérations adapté pour exécuter les opérations prédéterminées correspondant à l'adresse source du message reçu si l'adresse source du message reçu est trouvée dans la table d'opérations entre homologues ; ou pour informer le module de statistique qu'il convient d'effectuer une statistique de trafic sur le message si l'adresse source du message reçu ne se trouve pas dans la table d'opérations entre homologues.
